# EUROPEAN PATENT SPECIFICATION

(11) **EP 2 616 610 B1**
(45) Date of publication and mention of the grant of the patent: **27.04.2016**
(21) Application number: 11824664.4
(22) Date of filing: 11.08.2011
(51) Int. Cl.: C04B 28/02

(54) **USE OF COMPOUNDS CONTAINING ALUMINIUM OXIDE AND SILICON OXIDE FOR PRODUCING A HYDROPHILIC BUILDING PRODUCT**
VERWENDUNG ALUMINIUMOXID- UND SILICIUMOXIDHALTIGER VERBINDUNGEN ZUR HERSTELLUNG EINES HYDROPHILEN BAUPRODUKTS
UTILISATION DE COMPOSÉS CONTENANT DE L'OXYDE D'ALUMINIUM ET DE L'OXYDE DE SILICIUM POUR LA PRODUCTION D'UN PRODUIT DE CONSTRUCTION HYDROPHILE

(30) Priority: 13.09.2010 EP 10176340
(43) Date of publication of application: 24.07.2013
(73) Proprietor: Construction Research & Technology GmbH, 83308 Trostberg (DE)
(72) Inventor: GEHRIG, Uwe, 83368 St. Georgen (DE); ELLENRIEDER, Florian, 86152 Augsburg (DE); MELCHART, Michael, 83278 Traunstein (DE); RIEDMILLER, Joachim, 86316 Friedberg (DE); WACHE, Steffen, 83254 Breitbrunn (DE); DEGENKOLB, Mathias, 67434 Neustadt (DE); KUTSCHERA, Michael, 67434 Neustadt (DE); VOLAND, Katja, 12163 Berlin (DE)
(86) International application number: PCT/IB2011/053580
(87) International publication number: WO 2012/035455

(56) References cited:
- GB-A- 1 208 954
- JP-A- 6 107 479
- JP-A- 2000 073 046
- JP-A- 2007 162 355
- US-A1- 2003 072 935
- US-A1- 2008 245 273

## Description

The present invention relates to the use of a binder system comprising compounds containing aluminium oxide and silicon oxide for producing a hydrophilic building product and also the hydrophilic building product which can be obtained in this way.

Binders and building products of the above-described type have already been described in our earlier, unpublished, priority-establishing Patent Application EP 10161010 of 26.04.2010. However, a content of at least 25% by weight of glass beads, based on the total mass, is necessary there after curing, which is not the case in the present application.

In general, the cleanability of building products produced using inorganic binders is of great importance. Organic soiling in particular leads to visible spots which are difficult to remove on the surfaces of such building products.

Portland cement is a known inorganic binder. It was mentioned for the first time in the British Patent BP 5022 and has been continually developed further since then. Modern portland cement contains about 70% by weight of CaO + MgO, about 20% by weight of SiO₂ and about 10% by weight of Al₂O₃ + Fe₂O₃. Due to its high CaO content, it cures hydraulically. Cured portland cement has a pronounced roughness and is difficult to clean.

Particular slags from metallurgical processes can be used as latently hydraulic binders as additions to portland cements. Activation with strong alkalis such as alkali metal hydroxides, alkali metal carbonates or water glasses is also possible. They can be employed by blending with fillers (e.g. quartz sand having an appropriate particle size) and additives as mortars or concretes. For example, blast furnace slag is a typical latently hydraulic binder. The cured products generally have the properties of hydraulically cured systems.

Inorganic binder systems based on reactive compounds based on SiO₂ in combination with Al₂O₃ which cure in an aqueous alkaline medium are likewise generally known. Such cured binder systems are also referred to as "geopolymers" and are described, for example, in EP 1236702 A1, EP 1081114 A1, WO 85/03699, WO 08/012438, US 4,349,386 and US 4,472,199. Compared to cements, geopolymers can be cheaper and more resistant and may have a more favourable CO₂ emissions balance. As reactive oxide mixture, it is possible to use metakaolin, slags, fly ashes, activated clay or mixtures thereof. The alkaline medium for activating the binder usually comprises aqueous solutions of alkali metal carbonates, alkali metal fluorides, alkali metal hydroxides and/or water glass. In general, a geopolymer surface is less porous than a cement surface.

EP 1236702 A1 describes a building material mixture containing water glass for producing mortars based on a latent hydraulic binder, water glass and a metal salt from the group "metal hydroxide, metal oxide, carbon-containing metal salt, sulphur-containing metal salt, nitrogen-containing metal salt, phosphorus-containing metal salt, halogen-containing metal salt" as a control agent which are resistant to chemicals. Here, it is also possible to use slag sand as latently hydraulic constituent. As metal salt, alkali metal salts, in particular lithium salts, are mentioned and used.

EP 1081114 A1 describes a building material mixture for producing mortars which are resistant to chemicals, where the building material mixture contains water glass powder and at least one water glass hardener. Furthermore, over 10% by weight of at least one latent hydraulic binder is present and the building material mixture has at least one inorganic filler.

Documents GB 1208954B and JP 6107479A disclose the use of binder systems comprising compounds containing aluminium oxide and silicon oxide for producing hydrophilic building products, characterized in that the sum of the oxides calculated as Al₂O₃ and SiO₂ in the binder systems is ≥ 40% by weight, based on the water-free binder systems.

In our earlier, unpublished, priority-establishing Patent Application EP 09177153 of 26.11.2009, systems in which the binder cures in the form of a hybrid matrix which displays early resistance to acids, water and alkalis are described. In this earlier patent application, the use according to the invention as described in the present application is not described.

To protect surfaces of building products which are susceptible to soiling against external influences, these can be provided both with hydrophobic coatings and with hydrophilic coatings.

To remove paint soiling on exterior walls, antigraffiti systems, for example, have been developed and these reduce the adhesion of graffiti paints by hydrophobizing of the surface. Such coatings are described, inter alia, in WO 92/21729, WO 97/24407 and DE 19955047. Disadvantages of these systems are the often poor adhesion to the substrate, the low transparency, the high price and an unsatisfactory hardness.

US 2008/0250978 describes a hydrophobic, self-cleaning coating which is achieved by introduction of hydrophobized nanoparticles (e.g. microsilica or zinc oxide). The effectiveness of the coating is maintained over a number of weeks.

One method of applying a coating to the surface of a product made of concrete or mortar to improve the adhesion properties is disclosed in DE 3018826. An increase in the hydrophilicity is achieved by means of a mixture of polyvinyl alcohol and boric acid in aqueous solution, which gels as a result of the alkalinity of the substrate.

Further hydrophilic coatings and coating methods are described in CN 101440168, EP 2080740 and US 4,052,347. Organic additives are used in all these coatings.

The use of titanium dioxide (e.g. rutile or anatase) in building products or coating compositions is also known. Titanium dioxide acts photocatalytically, i.e. it decomposes organic soiling oxidatively, on UV irradiation (with appropriate doping also on irradiation with visible light). The hydrophilicity of the surfaces can also be increased by the use of titanium dioxide. Titanium dioxide can in principle be used in the body of the building product or as constituent of a coating composition.

For example, WO 08/079756 A1 describes a coating composition and a coated object, where the coating composition comprises photocatalytic particles (e.g. TiO₂ and an alkali metal silicate binder, further comprising boric acid, borates and mixtures thereof. EP 2080740 A1 describes a hydrophilic coating comprising titanium dioxide and an ether/oleate-based organic compound.

However, the use of titanium dioxide (and particularly the use in the body of the building product) is costly. In addition, photocatalytic self-cleaning is dependent on the presence of UV radiation. Photocatalytic self-cleaning can therefore not be used, for example, in the interior or sanitary sector without additional measures.

The inventors have addressed the object of substantially avoiding at least some of the disadvantages of the prior art discussed above. In particular, an inexpensive alternative to the abovementioned coatings which makes easy cleaning of the building products possible should be found. The ability of the active constituents to be removed from the surface of the building product and the necessity of a separate operation for upgrading the surface should be avoided.

The abovementioned objects are achieved by the features of the independent claim. The dependent claims relate to preferred embodiments.

It has surprisingly been found that compounds containing aluminium oxide and silicon oxide give, at particular mixing ratios, hydrophilic properties in the cured building product. A particular advantage is that this is not a pure surface effect but rather the complete material of the building product has these properties.

The present invention provides for the use of a binder system for producing a hydrophilic building product, wherein the binder system comprises hydraulic, latent hydraulic and/or pozzolanic binders and also alkali metal silicate, wherein the hydraulic binder is selected from among portland cements, aluminate cements and mixtures thereof, wherein the binder system comprises compounds containing aluminium oxide and silicon oxide, wherein the sum of the oxides calculated as Al₂O₃ and SiO₂ in the binder system is ≥ 40% by weight, based on the water-free binder system, and the contact angle of an oil drop placed on the surface of the cured building product is ≥ 90°, where the contact angle determination is carried out under water, which is characterized in that the content of portland cements and/or aluminate cements in the binder system is ≤ 20% by weight, based on the water-free binder system.

For the purposes of the present invention, "compounds containing aluminium oxide and silicon oxide" are compounds which comprise aluminium, silicon and oxygen. In quantitative analyses, it is generally customary to report the aluminium and silicon contents as Al₂O₃ and SiO₂, without aluminium and silicon actually having to be present as oxides. According to the invention, for example, silicates, aluminates, aluminosilicates, mixed oxides (e.g. Al₂Si₂O₇), cements, SiO₂ together with an aluminium source or Al₂O₃ together with a silicon source, etc., are also encompassed.

According to the invention, the "binder system" comprises compounds containing aluminium oxide and silicon oxide. Preferred constituents of the binder system are discussed below. The oxide contents according to the invention are calculated in percent by weight (% by weight) on the basis of the "water-free binder system", i.e. water is not, according to the invention, regarded and calculated as constituent of the binder system.

As soon as the binder system comes into contact with water, setting and curing of the binder system occurs. The water is either kept separately from the binder and added when required (one-component formulation) or kept together with an alkaline activator and added when required (two-component formulation). This gives the hydrophilic building product of the invention. Preferred building material formulations and building products are mentioned below. For the product to be considered to be a "cured building product" in the context of the present invention, setting and curing of the binder system have to have progressed at least so far that the product does not disintegrate again on addition of an excess of water. A cured building product was advantageously allowed to cure for at least one day, preferably at least three days, particularly preferably at least 7 days and in particular at least 28 days. Curing advantageously takes place at room temperature. However, curing in the range from 0°C to 500°C is generally also encompassed according to the invention.

The hydrophilicity of the "hydrophilic building product" is defined by means of the contact angle of an oil drop placed on the surface of the cured building product. If the building product is porous, an oil drop will be at least partly absorbed by the surface of the building product, so that a dynamic contact angle determination is necessary. In the present case, the dynamic contact angle determination is carried out by means of a proprietary measurement method carried out under water which is described comprehensively in the examples.

Measurement of the contact angle under water is appropriate in view of the fact that in the case of the systems which are particularly preferred according to the invention oil drops become detached from the surface of the hydrophilic building product purely by addition of water. For the purposes of the present invention, "hydrophilic" means a contact angle of ≥ 90°. At contact angles of ≥ 135°, the term "superhydrophilicity" can also be employed. Particular preference is given to systems in which the oil drop becomes detached after short-time exposure to water. In this case, the contact angle is considered to be 180°.

A relatively high content of the oxides in question in the binder system can be advantageous since it tends to increase the hydrophilicity of the cured building product. The sum of the oxides calculated as Al₂O₃ and SiO₂ in the binder system is preferably ≥ 50% by weight, particularly preferably ≥ 60% by weight, based on the water-free binder system.

A higher hydrophilicity gives a higher contact angle. It has been found to be particularly advantageous for the contact angle to be ≥ 100°, preferably ≥ 120° and in particular ≥ 135° (superhydrophilicity).

The contact angle is, however, not an intrinsic feature of the oxide content of the binder system as will be illustrated hereinbelow. There are systems containing high levels of the oxides in question and still exhibit low contact angles. It is thus necessary to employ ≥ 40% by weight of these oxides and make sure that the contact angle is ≥ 90° in order to come up with a useful binder system.

A certain content of SiO₂ appears advantageous to achieve a high contact angle. The content of the oxides calculated as SiO₂ in the binder system should preferably be ≥ 15% by weight, particularly preferably ≥ 25% by weight and in particular ≥ 35% by weight, based on the water-free binder system.

According to the invention, no titanium dioxide is necessary to achieve the effect of the high hydrophilicity and the associated easy cleanability of the surfaces ("easy to clean" effect). However, the binder system can optionally also contain compounds containing titanium oxide and/or zirconium oxide, i.e. compounds comprising titanium and/or zirconium and oxygen. The sum of the oxides calculated as Al₂O₃, SiO₂, TiO₂ and ZrO₂ in the binder system is then preferably ≥ 41 % by weight, particularly preferably ≥ 50% by weight and in particular ≥ 60% by weight, based on the water-free binder system.

The content of CaO should be far below the contents customary for cement-based systems. Pure portland cement contains about 60% by weight of CaO. Firstly, it would then seem arithmetically barely possible for the content of Al₂O₃ and SiO₂ of ≥ 40% by weight required as stated at the outset to be achieved, and secondly a high CaO content does not appear to be particularly effective according to the invention. The content of the oxides calculated as CaO in the binder system is preferably ≤ 35% by weight, more preferably ≤ 30% by weight, particularly preferably from 8 to 28% by weight and in particular from 12 to 25% by weight, based on the water-free binder system.

It has been found that the oxide composition in particular is responsible for the inventive effect of high hydrophilicity and easy cleanability. This oxide composition is advantageously achieved by the binder system comprising hydraulic, latent hydraulic and/or pozzolanic binders and also alkali metal silicate.

The content of portland cements and/or aluminate cements in the binder system should preferably be ≤ 10% by weight, based on the water-free binder system. As demonstrated below in the experimental part, building products produced from pure portland cement or aluminate cement (high-alumina cement) have very small contact angles.

As indicated above, portland cement contains about 70% by weight of CaO + MgO, about 20% by weight of SiO₂ and about 10% by weight of Al₂O₃ + Fe₂O₃. Aluminate cement or high-alumina cement contains from about 20 to 40% by weight of CaO, up to about 5% by weight of SiO₂, from about 40 to 80% by weight of Al₂O₃ and up to about 20% by weight of Fe₂O₃. These types of cement are well known in the prior art.

The latent hydraulic binder is selected, for example, from among slags, in particular blast furnace slag, slag sand, ground slag sand, electrothermic phosphorus slag, steel slag and mixtures thereof. These slags can be either industrial slags, i.e. waste products from industrial processes, or synthetically reproduced slags. The latter is advantageous since industrial slags are not always available in a constant amount and quality.

For the purposes of the present invention, a latent hydraulic binder is preferably a binder in which the molar ratio of (CaO + MgO):SiO₂ is in the range from 0.8 to 2.5 und particularly preferably in the range from 1.0 to 2.0.

Blast furnace slag is a waste product of the blast furnace process. Slag sand is granulated blast furnace slag and ground slag sand is finely pulverized slag sand. Ground slag sand varies in terms of its milling fineness and particle size distribution depending on the origin and processing form, with the milling fineness having an influence on the reactivity. As characteristic parameter for the milling fineness, use is made of the Blaine value which is typically in the range from 200 to 1000 m² kg⁻¹, preferably in the range from 300 to 500 m² kg⁻¹. The finer the milling, the higher the reactivity. Blast furnace slag generally comprises from 30 to 45% by weight of CaO, from about 4 to 17% by weight of MgO, from about 30 to 45% by weight of SiO₂ and from about 5 to 15% by weight of Al₂O₃, typically about 40% by weight of CaO, about 10% by weight of MgO, about 35% by weight of SiO₂ and about 12% by weight of Al₂O₃.

Electrothermic phosphorus slag is a waste product of the electrothermic production of phosphorus. It is less reactive than blast furnace slag and contains from about 45 to 50% by weight of CaO, from about 0.5 to 3% by weight of MgO, from about 38 to 43% by weight of SiO₂, from about 2 to 5% by weight of Al₂O₃ and from about 0.2 to 3% by weight of Fe₂O₃ and also fluoride and phosphate. Steel slag is a waste product of various steel production processes and has a highly variable composition (see Caijun Shi, Pavel V. Krivenko, Della Roy, Alkali-Activated Cements and Concretes, Taylor & Francis, London & New York, 2006, pp. 42-51).

The pozzolanic binder is selected, for example, from among amorphous silica, preferably precipitated silica, pyrogenic silica and microsilica, ground glass, fly ash, preferably brown coal fly ash and mineral coal fly ash, metakaolin, natural pozzolanas such as tuff, trass and volcanic ash, natural and synthetic zeolites and also mixtures thereof. An overview of pozzolanic binders which are suitable for the purposes of the invention may be found, for example, in Caijun Shi, Pavel V. Krivenko, Della Roy, Alkali-Activated Cements and Concretes, Taylor & Francis, London & New York, 2006, pp.51-63. Testing of the pozzolanic activity can be carried out in accordance with DIN EN 196 Part 5.

Amorphous silica is all the more reactive the smaller the particle diameters. Amorphous silica is preferably an X-ray-amorphous silica, i.e. a silica which displays no crystallinity in the powder diffraction pattern. For the purposes of the invention, ground glass should likewise be considered to be amorphous silica.

The amorphous silica used according to the invention advantageously has a content of at least 80% by weight, preferably at least 90% by weight of SiO₂. Precipitated silica is obtained industrially by precipitation processes starting out from water glass. Depending on the production process, precipitated silica is also referred to as silica gel. Pyrogenic silica is produced by reaction of chlorosilanes such as silicon tetrachloride in an oxyhydrogen flame. Pyrogenic silica is an amorphous SiO₂ powder having a particle diameter of from 5 to 50 nm and a specific surface area of from 50 to 600 m² g⁻¹.

Microsilica is a by-product of silicon, ferrosilicon or zirconium production and likewise comprises mainly amorphous SiO₂ powder. The particles have diameters in the range from 0.1 µm to 1.0 µm. The specific surface area is in the range from 15 to 30 m² g⁻¹.

In comparison, commercial quartz sand is crystalline and has comparatively large particles and a comparatively low specific surface area. According to the invention, it serves as inert aggregate.

Fly ashes are formed, inter alia, in the combustion of coal in power stations. Fly ash of class C contains, according to WO 08/012438, about 10% by weight of CaO, while fly ashes of class F contain less than 8% by weight, preferably less than 4% by weight and typically about 2% by weight, of CaO. The CaO content of fly ash of class C can in individual cases be up to 25% by weight.

Metakaolin is formed in the dehydration of kaolin. While kaolin gives off physically bound water at from 100 to 200°C, dehydroxylation with breakdown of the lattice structure and formation of metakaolin (Al₂Si₂O₇) takes place at from 500 to 800°C. Pure metakaolin accordingly contains about 54% by weight of SiO₂ and about 46% by weight of Al₂O₃.

The alkali metal silicate is advantageously selected from among compounds having the empirical formula m SiO₂· n M₂O, where M is Li, Na and K and mixtures thereof, preferably Na and K.

The molar ratio of m:n is advantageously from 0.5 to 4.0, preferably from 0.7 to 3.8, particularly preferably from 0.9 to 3.7 and in particular from 1.6 to 3.2.

The alkali metal silicate is preferably a water glass, particularly preferably a water glass powder and in particular a sodium or potassium water glass. However, it is also possible to use lithium or ammonium water glasses and also mixtures of the water glasses mentioned.

The abovementioned ratio of m:n (also referred to as modulus) should preferably not be exceeded since otherwise complete reaction of the components can no longer be expected. It is also possible to employ lower moduli such as about 0.2. Water glasses having higher moduli should be brought to moduli in the range according to the invention before use by means of a suitable aqueous alkali metal hydroxide.

Potassium water glasses are commercially available primarily as aqueous solutions since they are strongly hygroscopic; sodium water glasses are also commercially available as solids in the advantageous modulus range. The solids contents of the aqueous water glass solutions are generally from 20% by weight to 60% by weight, preferably from 30 to 50% by weight. Preference is given, in particular, to potassium water glasses since they have a lower tendency to effloresce than sodium water glasses.

Water glasses can be produced industrially by melting of quartz sand with the appropriate alkali metal carbonates. However, they can also be obtained without difficulty from mixtures of reactive silicas with the appropriate aqueous alkali metal hydroxides or alkali metal carbonates. It is therefore possible, according to the invention, to replace at least part of the alkali metal silicate by a mixture of a reactive silica and the appropriate alkali metal hydroxide or alkali metal carbonate.

The amount of water required for setting is generally from 15 to 60% by weight, preferably from about 25 to 50% by weight. These amounts are in addition to the total weight of the water-free binder system, which is calculated as 100% by weight.

The hydraulic, latent hydraulic and/or pozzolanic binder and also the alkali metal silicate can be present together as one component in the binder system of the invention. This embodiment is preferred according to the invention. The one-component formulation is mixed with water when required.

However, the hydraulic, latent hydraulic and/or pozzolanic binder can also be present as a first component in the binder system of the invention. In this case, the alkali metal silicate is present together with at least the amount of water required for setting as a second component, which is used for mixing with the first component when required.

Inert fillers and/or further additives can be present in the binder of the invention. These optional components can alternatively also be added only when making up a mortar, concrete, etc.

Possible inert fillers are generally known gravels, sands and/or flours, for example those based on quartz, limestone, barite or clay, in particular quartz sand. Lightweight fillers such as perlite, kieselguhr (diatomaceous earth), expanded mica (vermiculite) and foam sand can also be used.

Possible additives are, for example, known plasticizers (e.g. polycarboxylate ethers), antifoams, water retention agents, fluidizers, pigments, fibres, dispersion powders, wetting agents, retardants, accelerators, complexing agents, aqueous dispersions and rheology modifiers.

The binder system can, according to the invention, be used as or as a constituent of building material formulations and/or for producing building products such as on-site concrete, finished concrete parts, concrete goods, concrete bricks and also in-situ concrete, sprayed concrete, ready-mix concrete, building adhesives and thermal insulation composite system adhesives, concrete repair systems, one-component and two-component sealing slurries, screeds, knifing fillers and self-levelling compositions, tile adhesives, renders, adhesives and sealants, coating and paint systems, in particular for tunnels, waste water drains, splash protection and condensate lines, dry mortars, joint grouts, drainage mortars and/or repair mortars.

The invention further provides the hydrophilic building product which can be obtained according to the invention.

The present invention will now be illustrated by means of the following examples with reference to the accompanying drawings. In the drawings:
- Fig. 1: shows the dynamic behaviour of an oil drop in the contact angle measurement including evaluation of the drop shapes.
- Fig. 2: shows a graphical presentation of dynamic contact angle measurements on various samples.
- Fig. 3: shows a graphical presentation of dynamic contact angle measurements on various control samples (not according to the invention).

### Examples

### Dynamic contact angle measurement in the oil/water/solid system

Contact angles are measured using a standardized apparatus (Drop Shape Analysis Instrument Kruss DSA 10 from Kruss). For this purpose, the shadow of an (oil) drop is recorded using a video camera and evaluated by computerized image analysis.

For this purpose, 2.0 µl of oil (e.g. machine oil (preferred), sunflower oil, paraffin oil, etc.) are initially placed on a dry substrate which has been equilibrated at 23°C and 50% relative atmospheric humidity. The substrate with the oil drop is then placed on the bottom of an optical cell and the cell is introduced into the contact angle measurement instrument. The optical system is adjusted to give a sharp image of the oil drop. The cell is then filled with water within 2-3 seconds by means of a wide tube. At the same time, video recording is commenced and the optical system is refocused since the water in the beam path changes the focus. During this period of time of up to 10 seconds, there is an uncertainty in respect of the time scale of the dynamic measurements. The dynamic behaviour during this period of time is not employed for assessing the final contact angle. The video is recorded until the oil drop becomes detached or no significant change in contact angle is observed over more than 30 seconds.

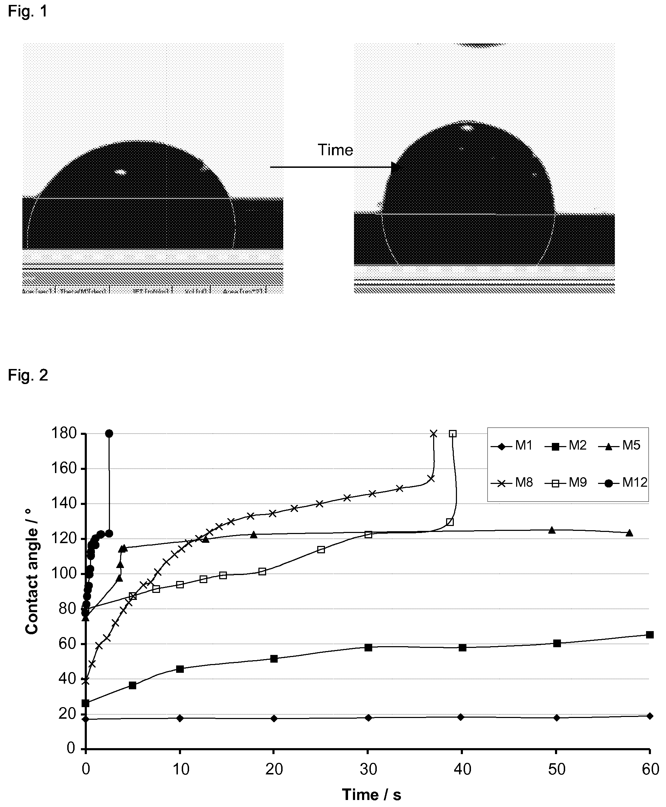

After the end of the measurement, the contour of the oil drop is evaluated on individual video images by means of the software "DSA" for digital image analysis made available by the manufacturer of the measurement instrument. For a reliable evaluation of the drop shape and thus the contact angle, a suitable fitting method conforming the drop shape has to be selected. An elliptical or circular fitting including evaluation of the tangents has been found to be suitable over a wide range of contact angles (cf. Fig. 1). In the case of very dynamic systems in which the oil drops quickly become detached, drop shapes which occur temporarily cannot always be evaluated in terms of classical drop shapes. This leads to some uncertainty in the contact angle determined by fitting of not more than 10°, typically about 5°. In dynamic measurement curves, these effects can appear as sudden small jumps in the contact angle. Detachment, on the other hand, can readily be recognized and evaluated - the resulting contact angle of a freely floating oil drop is manually entered as 180°. All contact angles are stored as a function of time and can be used for further evaluations.

### Raw materials

- Portland cement 52,5 R containing about 22% by weight of SiO₂, 4% by weight of Al₂O₃, 65% by weight of CaO and < 1 % by weight of alkali metal oxide; Blaine value > 380 m² kg⁻¹;
- high-alumina cement (1) (Secar^{®} 51, Kerneos Inc.) containing about 5% by weight of SiO₂, 52% by weight of Al₂O₃, 37% by weight of CaO, < 1 % by weight of alkali metal oxide, ca. 2% by weight of TiO₂, and < 0.5% by weight of ZrO₂; Blaine value > 300 m² kg⁻¹;
- high-alumina cement (2) (Thernal^{®} White, Kerneos Inc.) containing about 2% by weight of SiO₂, 68% by weight of Al₂O₃, 29% by weight of CaO, < 1 % by weight of alkali metal oxide, and < 1 % by weight of TiO₂ plus ZrO₂;
- high-alumina cement (3) (Ciment Fondu^{®}, Kerneos Inc.) containing about 5% by weight of SiO₂, 38% by weight of Al₂O₃, 36% by weight of CaO, < 1% by weight of alkali metal oxide, ca. 2% by weight of TiO₂, and < 0.5% by weight of ZrO₂;
- polycarboxylate ether Glenium^{®} 51 (BASF Construction Polymers GmbH);
- ground slag sand containing about 34% by weight of SiO₂, 12% by weight of Al₂O₃, 43% by weight of CaO und < 1 % by weight of alkali metal oxide; Blaine value > 380 m² kg⁻¹;
- microsilica containing > 90% by weight of SiO₂ and in each case < 1 % by weight of Al₂O₃, CaO and alkali metal oxide; BET surface area > 15 000 m² kg⁻¹;
- mineral coal fly ash containing about 50% by weight of SiO₂, 26% by weight of Al₂O₃, 4% by weight of CaO and 5% by weight of alkali metal oxide; Blaine value > 400 m² kg⁻¹;
- metakaolin containing about 56% by weight of SiO₂, 41 % by weight of Al₂O₃ and in each case < 1 % by weight of CaO and alkali metal oxide; BET surface area > 10 000 m² kg⁻¹;
- quartz sand having 0.063 mm < d < 0.40 mm;
- potassium hydroxide solution (10% strength);
- sodium water glass (modulus: 1.7; solids content: 40% by weight);
- potassium water glass (modulus: 1.0 or 2.0; solids content: 40% by weight);
- titanium dioxide containing at least 99% by weight of TiO₂ (Sigma-Aldrich);
- zirconium dioxide containing at least 99% by weight of ZrO₂ (Sigma-Aldrich);
- sodium water glass powder (modulus: 1.0; solids content: 84% by weight).

### Sample preparation

All pulverulent materials are advantageously firstly homogenized and subsequently mixed with the liquid component. In the case of batches M1, M2 and M8, where water glass powder is used, the make-up liquid is water. The remaining examples are two-component systems since the activator is in each case added separately. Mixing is carried out using a drilling machine and a disc stirrer at a moderate rotational speed. The mixtures are firstly stirred for about one minute until a homogeneous composition is formed. After a maturing time of three minutes, the mortars are stirred again and applied in a thickness of about 3-5 mm to a moistened concrete plate surface. After storage of the coated plates (7 days at 23°C and 50% relative atmospheric humidity), soiling tests using crayon, red wine, motor oil and chewing gum are carried out. The specified test media are applied to the mortars M1 to M12 and the coated concrete plates are stored under water for one hour. After taking out from the water bath, the surface of the coating is freed of excess water and the soiling residue is assessed. In a second step, remaining spots can be cleaned off afterwards by means of a hand brush.

The test media removal is assessed according to five grades:
+ + easily removable
+ removable
○ partly removable
- barely removable
- - not removable.

Owing to the relevance to practice, all binder compositions were mixed with quartz sand. The oxide compositions shown in Tables 1 b, 2b and 3b are based on only the water-free binders. This means that both the quartz sand and the water are not included in the calculations.

### Example 1

In Example 1, two reference systems are firstly examined in terms of their cleanability. While M1 is a conventional portland cement mortar, the experimental formulation M2 is a pure high-alumina cement mortar. Table 1a shows the experimental formulations, Table 1 b shows the oxide compositions and Table 1 c shows the assessment of the cleanability.

**Table 1a: Experimental formulations, amounts in gram (g)**

| **Raw materials** | **M1** | **M2** |
|---|---|---|
| Portland cement 52,5 R | 300 | |
| High-alumina cement (1) | | 300 |
| Quartz sand | 700 | 700 |
| Polycarboxylate ether | 3 | |
| Water | 135 | 150 |

**Table 1b: Oxide compositions of the water-free binders (% by weight)**

| **Oxides** | **M1** | **M2** |
|---|---|---|
| SiO₂ | 23 | 5 |
| Al₂O₃ | 4 | 52 |
| CaO | 67 | 37 |
| K₂O | 1 | < 0.5 |
| Na₂O | < 0.5 | < 0.5 |
| TiO₂ | < 0.5 | 2 |
| ZrO₂ | < 0.5 | < 0.5 |

**Table 1c: Assessment of the cleanability**

| **Soiling medium** | **M1** | **M2** |
|---|---|---|
| Crayon | - | - |
| Red wine | - | ○ |
| Motor oil | - | -- |
| Chewing gum | - | ○ |

It can be seen for both mortars that the media can be removed only partly and often not at all. The oil drop forms a dark spot, while the chewing gum bonds strongly to the cement surface and cannot be removed without leaving a residue.

### Example 2

In Example 2, various mixtures of compounds containing aluminium oxide and silicon oxide are examined in respect of their cleanability. Table 2a shows the experimental formulations, Table 2b shows the oxide compositions and Table 2c shows the assessment of the cleanability.

**Table 2a: Experimental formulations, amounts in gram (g)**

| **Raw materials** | **M3** | **M4** | **M5** | **M6** | **M7** |
|---|---|---|---|---|---|
| Ground slag sand | | 200 | 200 | 150 | 200 |
| Microsilica | | 100 | | 150 | |
| Mineral coal fly ash | | | 100 | | 100 |
| Metakaolin | 200 | | | | |
| Quartz sand | 800 | 700 | 700 | 700 | 700 |
| Potassium hydroxide solution (10% strength) | | | | 200 | |
| Sodium water glass (modulus 1.7; solids content 40%) | | | | | 200 |
| Potassium water glass (modulus 1.0; solids content 40%) | 350 | 200 | 200 | | |

**Table 2b: Oxide compositions of the water-free binders (% by weight)**

| **Oxides** | **M3** | **M4** | **M5** | **M6** | **M7** |
|---|---|---|---|---|---|
| SiO₂ | 49 | 52 | 41 | 63 | 46 |
| Al₂O₃ | 24 | 6 | 13 | 5 | 13 |
| CaO | 1 | 23 | 24 | 20 | 24 |
| K₂O | 26 | 14 | 15 | 7 | 1 |
| Na₂O | < 0.5 | < 0.5 | < 0.5 | < 0.5 | 8 |
| TiO₂ | 1 | 1 | 1 | 1 | 1 |
| ZrO₂ | < 0.5 | < 0.5 | < 0.5 | < 0.5 | < 0.5 |

**Table 2c: Assessment of the cleanability**

| **Soiling medium** | **M3** | **M4** | **M5** | **M6** | **M7** |
|---|---|---|---|---|---|
| Crayon | + | ++ | + | ○ | + |
| Red wine | ○ | + | + | + | ++ |
| Motor oil | ++ | + | + | + | + |
| Chewing gum | + | ++ | + | ++ | ++ |

The experimental formulations M3 to M7 show a significantly better cleanability compared to the formulations M1 and M2. The motor oil drop displays, for example, virtually no affinity to the inorganic matrix and on storage under water rises to the water surface after only a few seconds. Depending on the binder mixture, the surfaces vary slightly in respect of their cleanability.

### Example 3

In Example 3, further mixtures of compounds containing aluminium oxide and silicon oxide are examined in respect of their cleanability. Table 3a shows the experimental formulations, Table 3b shows the oxide compositions and Table 3c shows the assessment of the cleanability. These examples demonstrate, inter alia, the influence of TiO₂, ZrO₂ and portland cement and also water glass having a high modulus (2.0) in respect of the cleanability. In addition, a formulation containing sodium water glass powder is included.

**Table 3a: Experimental formulations, amounts in gram (g)**

| **Raw materials** | **M8** | **M9** | **M10** | **M11** | **M12** |
|---|---|---|---|---|---|
| Ground slag sand | 200 | 200 | 200 | 160 | 200 |
| Portland cement 52,5 R | | | | 40 | |
| Mineral coal fly ash | | 60 | 60 | | 100 |
| Microsilica | 100 | | | 100 | |
| Titanium dioxide | | 40 | | | |
| Zirconium dioxide | | | 40 | | |
| Quartz sand | 700 | 700 | 700 | 700 | 700 |
| Sodium water glass powder (modulus 1.0; solids content 84%) | 80 | | | | |
| Potassium water glass (modulus 1.0; solids content 40%) | | 250 | 250 | 200 | |
| Potassium water glass (modulus 2.0; solids content 40%) | | | | | 250 |
| Water | 120 | | | | |

**Table 3b: Oxide compositions of the water-free binders (% by weight)**

| **Oxides** | **M8** | **M9** | **M10** | **M11** | **M12** |
|---|---|---|---|---|---|
| SiO₂ | 55 | 35 | 35 | 51 | 45 |
| Al₂O₃ | 6 | 10 | 10 | 5 | 13 |
| CaO | 24 | 22 | 22 | 25 | 23 |
| K₂O | 1 | 17 | 17 | 14 | 13 |
| Na₂O | 10 | < 0.5 | < 0.5 | < 0.5 | < 0.5 |
| TiO₂ | 1 | 11 | 1 | < 0.5 | 1 |
| ZrO₂ | < 0.5 | < 0.5 | 10 | < 0.5 | < 0.5 |

**Table 3c: Assessment of the cleanability**

| **Soiling medium** | **M8** | **M9** | **M10** | **M11** | **M12** |
|---|---|---|---|---|---|
| Crayon | ○ | + | ○ | + | ○ |
| Red wine | ++ | + | + | ○ | ++ |
| Motor oil | ++ | ++ | ++ | - | ++ |
| Chewing gum | + | ++ | ++ | + | ++ |

Both the use of sodium water glass powder (M8) and the use of titanium dioxide and zirconium dioxide (M9 and M10) in the formulations lead to reduced soiling. The partial replacement of ground slag sand in M4 gives the mixture M11. This has reduced performance compared to M4, but still displays a lower soiling tendency than the two cement-based formulations M1 and M2. The high water glass modulus in M12 leads to an improved ability to remove red wine, motor oil and chewing gum.

### Example 4

The formulations M1, M2, M5, M8, M9 and M12 were also characterized by means of the above-described dynamic contact angle measurement. The measured values are shown in Fig. 2. It can be seen here that the two reference systems M1 and M2 have, after a measurement time of 60 seconds, a contact angle of an oil drop placed on the surface of about 20° and about 60°, respectively. In the case of the mixture M5 according to the invention, a contact angle of about 125° can be observed after a measurement time of 60 seconds. In the case of the formulations M8, M9 and M12, the oil drop becomes detached from the surface within the first minute, which corresponds to a maximum contact angle of 180°.

### Example 5 (comparative)

In this Comparative Example formulations of binder systems are shown which comprise aluminium oxide plus silicon dioxide of more than 40 % by weight, but do not form hydrophilic building products. Table 4a shows the experimental formulations, Table 4b shows the oxide compositions. The formulations M13, M14, M15, M16, and M17 were characterized by means of the above-described dynamic contact angle measurement.

**Table 4a: Experimental formulations, amounts in gram (g)**

| **Raw materials** | **M13** | **M14** | **M15** | **M16** | **M17** |
|---|---|---|---|---|---|
| Portland cement 52,5 R | | | | 225 | 200 |
| High-alumina cement (2) | 300 | | | | |
| High-alumina cement (3) | | 300 | 225 | | |
| Mineral coal fly ash | | | | | 100 |
| Microsilica | | | 75 | 75 | |
| Quartz sand | 700 | 700 | 700 | 700 | 700 |
| Water | 185 | 175 | 210 | 200 | 160 |

**Table 4b: Oxide compositions of the water-free binders (% by weight)**

| **Oxides** | **M13** | **M14** | **M15** | **M16** | **M17** |
|---|---|---|---|---|---|
| SiO₂ | 2 | 5 | 28 | 41 | 33 |
| Al₂O₃ | 68 | 38 | 28 | 3 | 11 |
| CaO | 29 | 36 | 27 | 49 | 45 |
| K₂O | < 0.5 | < 0.5 | < 0.5 | 1 | 2 |
| Na₂O | < 0.5 | < 0.5 | < 0.5 | < 0.5 | < 0.5 |
| TiO₂ | < 0.5 | 2 | 1 | < 0.5 | < 0.5 |
| ZrO₂ | < 0.5 | < 0.5 | < 0.5 | < 0.5 | < 0.5 |

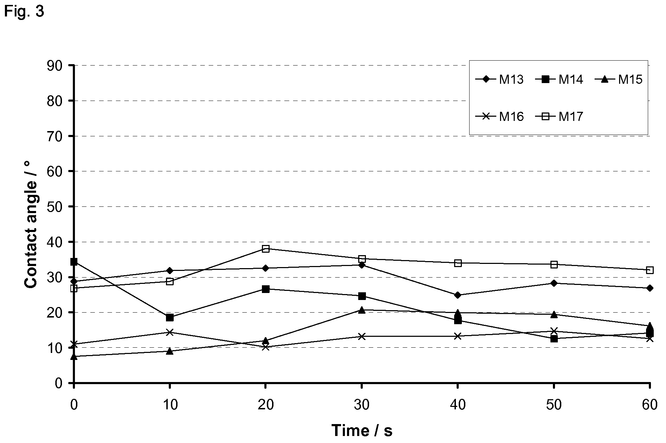

The measured values are shown in Fig. 3. It can be seen there that these comparative samples have contact angles of less than 40°.

## Claims

1. Use of a binder system for producing a hydrophilic building product,
wherein the binder system comprises hydraulic, latent hydraulic and/or pozzolanic binders and also alkali metal silicate,
wherein the hydraulic binder is selected from among portland cements, aluminate cements and mixtures thereof,
wherein the binder system comprises compounds containing aluminium oxide and silicon oxide,
wherein the sum of the oxides calculated as Al₂O₃ and SiO₂ in the binder system is ≥ 40% by weight, based on the water-free binder system, and the contact angle of an oil drop placed on the surface of the cured building product is ≥ 90°,
where the contact angle determination is carried out under water,
**characterized in that** the content of portland cements and/or aluminate cements in the binder system is ≤ 20% by weight, based on the water-free binder system.

2. Use according to Claim 1, **characterized in that** the sum of the oxides calculated as Al₂O₃ and SiO₂ in the binder system is ≥ 50% by weight, preferably ≥ 60% by weight, based on the water-free binder system.

3. Use according to Claim 1 or 2, **characterized in that** the contact angle is ≥ 100°, preferably ≥ 120° and in particular ≥ 135°.

4. Use according to any of Claims 1 to 3, **characterized in that** the content of the oxides calculated as SiO₂ in the binder system is ≥ 15% by weight, preferably ≥ 25% by weight and in particular ≥ 35% by weight, based on the water-free binder system.

5. Use according to any of Claims 1 to 4, **characterized in that** the binder system further comprises compounds containing titanium oxide and/or zirconium oxide and the sum of the oxides calculated as Al₂O₃, SiO₂, TiO₂ and ZrO₂ in the binder system is ≥ 41 % by weight, preferably ≥ 50% by weight and in particular ≥ 60% by weight, based on the water-free binder system.

6. Use according to any of Claims 1 to 5, **characterized in that** the content of oxides calculated as CaO in the binder system is ≤ 35% by weight, preferably ≤ 30% by weight, particularly preferably from 8 to 28% by weight and in particular from 12 to 25% by weight, based on the water-free binder system.

7. Use according to any of Claims 1 to 6, **characterized in that** the content of port-land cements and/or aluminate cements in the binder system is ≤ 10% by weight, based on the water-free binder system.

8. Use according to any of Claims 1 to 6, **characterized in that** the latent hydraulic binder is selected from among industrial and/or synthetic slags, in particular blast furnace slag, slag sand, ground slag sand, electrothermic phosphorus slag, steel slag and mixtures thereof.

9. Use according to any of Claims 1 to 6, **characterized in that** the pozzolanic binder is selected from among amorphous silica, preferably precipitated silica, pyrogenic silica and microsilica, ground glass, fly ash, preferably brown coal fly ash and mineral coal fly ash, metakaolin, natural pozzolanas such as tuff, trass and volcanic ash, natural and synthetic zeolites and mixtures thereof.

10. Use according to any of Claims 1 to 6, **characterized in that** the alkali metal silicate is selected from among compounds having the empirical formula m SiO₂ n M₂O, where M is Li, Na and K and mixtures thereof, preferably Na and K.

11. Use according to Claim 10, **characterized in that** the molar ratio m:n is from 0.5 to 4.0, preferably from 0.7 to 3.8, particularly preferably from 0.9 to 3.7 and in particular from 1.6 to 3.2.

12. Use according to any of Claims 1 to 11, **characterized in that** from 15 to 60% by weight, preferably from 25 to 50% by weight, of water is required for setting.

13. Use according to Claim 12, **characterized in that** the hydraulic, latent hydraulic and/or pozzolanic binder and the alkali metal silicate are present together as one component.

14. Use according to Claim 12, **characterized in that** the hydraulic, latent hydraulic and/or pozzolanic binder is present as a first component and the alkali metal silicate is present together with at least the amount of water required for setting as a second component.

15. Use according to any of Claims 1 to 14, **characterized in that** inert fillers and/or further additives are additionally present in the binder system.

16. Use according to any of Claims 1 to 15, **characterized in that** the binder system is used as or as a constituent of building material formulations and/or for producing building products such as on-site concrete, finished concrete parts, concrete goods, concrete bricks and also in-situ concrete, sprayed concrete, ready-mix concrete, building adhesives and thermal insulation composite system adhesives, concrete repair systems, one-component and two-component sealing slurries, knifing fillers and self-levelling compositions, tile adhesives, renders, adhesives and sealants, coating and paint systems, in particular for tunnels, waste water drains, splash protection and condensate lines, dry mortars, joint grouts, drainage mortars and/or repair mortars.

## Patentansprüche

1. Verwendung eines Bindemittelsystems, zur Herstellung eines hydrophilen Baustofferzeugnisses, wobei das Bindemittelsystem hydraulische, latent hydraulische und/oder puzzolanische Bindemittel sowie Alkalisilikat umfasst, wobei das hydraulische Bindemittel aus Portlandzementen, Aluminatzementen sowie Mischungen davon ausgewählt ist, wobei das Bindemittelsystem aluminiumoxidhaltige und siliziumoxidhaltige Verbindungen umfasst, wobei die Summe der als Al₂O₃ und SiO₂ berechneten Oxide im Bindemittelsystem ≥ 40 Gew.-%, bezogen auf das wasserfreie Bindemittelsystem, beträgt und der Kontaktwinkel eines auf die Oberfläche des ausgehärteten Baustofferzeugnisses aufgesetzten Öltropfens ≥ 90° beträgt, wobei die Kontaktwinkelbestimmung unter Wasser erfolgt, **dadurch gekennzeichnet, dass** der Gehalt an Portlandzementen und/oder Aluminatzementen im Bindemittelsystem ≤ 20 Gew.-%, bezogen auf das wasserfreie Bindemittelsystem, beträgt.

2. Verwendung nach Anspruch 1, **dadurch gekennzeichnet, dass** die Summe der als Al₂O₃ und SiO₂ berechneten Oxide im Bindemittelsystem ≥ 50 Gew.-%, vorzugsweise ≥ 60 Gew.-%, bezogen auf das wasserfreie Bindemittelsystem, beträgt.

3. Verwendung nach Anspruch 1 oder 2, **dadurch gekennzeichnet, dass** der Kontaktwinkel ≥ 100°, vorzugsweise ≥ 120° und insbesondere ≥ 135°, beträgt.

4. Verwendung nach einem der Ansprüche 1 bis 3, **dadurch gekennzeichnet, dass** der Gehalt der als SiO₂ berechneten Oxide im Bindemittelsystem ≥ 15 Gew.-%, vorzugsweise ≥ 25 Gew.-% und insbesondere ≥ 35 Gew.-%, bezogen auf das wasserfreie Bindemittelsystem, beträgt.

5. Verwendung nach einem der Ansprüche 1 bis 4, **dadurch gekennzeichnet, dass** das Bindemittelsystem des Weiteren titanoxidhaltige und/oder zirkonoxidhaltige Verbindungen umfasst und die Summe der als Al₂O₃, SiO₂, TiO₂ und ZrO₂ berechneten Oxide im Bindemittelsystem ≥ 41 Gew.-%, vorzugsweise ≥ 50 Gew.-% und insbesondere ≥ 60 Gew.-%, bezogen auf das wasserfreie Bindemittelsystem, beträgt.

6. Verwendung nach einem der Ansprüche 1 bis 5, **dadurch gekennzeichnet, dass** der Gehalt der als CaO berechneten Oxide im Bindemittelsystem ≤ 35 Gew.-%, vorzugsweise ≤ 30 Gew.-%, besonders bevorzugt von 8 bis 28 Gew.-% und insbesondere von 12 bis 25 Gew.-%, bezogen auf das wasserfreie Bindemittelsystem, beträgt.

7. Verwendung nach einem der Ansprüche 1 bis 6, **dadurch gekennzeichnet, dass** der Gehalt an Portlandzementen und/oder Aluminatzementen im Bindemittelsystem ≤ 10 Gew.-%, bezogen auf das wasserfreie Bindemittelsystem, beträgt.

8. Verwendung nach einem der Ansprüche 1 bis 6, **dadurch gekennzeichnet, dass** das latent hydraulische Bindemittel aus industriellen und/oder synthetischen Schlacken, insbesondere aus Hochofenschlacke, Hüttensand, Hüttensandmehl, elektrothermischer Phosphorschlacke, Edelstahlschlacke sowie Mischungen davon ausgewählt ist.

9. Verwendung nach einem der Ansprüche 1 bis 6, **dadurch gekennzeichnet, dass** das puzzolanische Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen sowie Mischungen davon ausgewählt ist.

10. Verwendung nach einem der Ansprüche 1 bis 6, **dadurch gekennzeichnet, dass** das Alkalisilikat aus Verbindungen mit der empirischen Formel m SiO₂ · n M₂O ausgewählt ist, wobei M für Li, Na und K sowie Mischungen davon steht, vorzugsweise für Na und K.

11. Verwendung nach Anspruch 10, **dadurch gekennzeichnet, dass** das molare Verhältnis m:n von 0,5 bis 4,0, vorzugsweise von 0,7 bis 3,8, besonders bevorzugt von 0,9 bis 3,7 und insbesondere von 1,6 bis 3,2, beträgt.

12. Verwendung nach einem der Ansprüche 1 bis 11, **dadurch gekennzeichnet, dass** zum Abbinden 15 bis 60 Gew.-%, vorzugsweise 25 bis 50 Gew.-%, Wasser erforderlich sind.

13. Verwendung nach Anspruch 12, **dadurch gekennzeichnet, dass** das hydraulische, latent hydraulische und/oder puzzolanische Bindemittel sowie das Alkalisilikat zusammen als eine Komponente vorliegen.

14. Verwendung nach Anspruch 12, **dadurch gekennzeichnet, dass** das hydraulische, latent hydraulische und/oder puzzolanische Bindemittel als eine erste Komponente und das Alkalisilikat zusammen mit mindestens der zum Abbinden erforderlichen Wassermenge als eine zweite Komponente vorliegen.

15. Verwendung nach einem der Ansprüche 1 bis 14, **dadurch gekennzeichnet, dass** zusätzlich inerte Füllstoffe und/oder weitere Additive im Bindemittelsystem anwesend sind.

16. Verwendung nach einem der Ansprüche 1 bis 15, **dadurch gekennzeichnet, dass** das Bindemittelsystem als oder als Bestandteil von Baustoffrezepturen und/oder zur Herstellung von Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Spachtel- und Verlaufsmassen, Fliesenklebern, Putzen, Kleb- und Dichtstoffen, Beschichtungs- und Anstrichsystemen, insbesondere für Tunnel, Abwasserkanäle, Spritzschutz und Kondensatleitungen, Trockenmörteln, Fugenmörteln, Drainagemörteln und/oder Reparaturmörteln verwendet wird.

## Revendications

1. Utilisation d'un système de liant pour produire un produit de construction hydrophile, dans laquelle le système de liant comprend des liants de type hydraulique, hydraulique latent et/ou pouzzolanique et aussi un silicate de métal alcalin,
dans laquelle le liant hydraulique est sélectionné parmi des ciments Portland, des ciments d'aluminates et des mélanges de ceux-ci,
dans laquelle le système de liant comprend des composés contenant de l'oxyde d'aluminium et de l'oxyde de silicium,
dans laquelle la somme des oxydes calculée sous forme d'Al₂O₃ et de SiO₂ dans le système de liant est ≥ 40 % en poids, relativement au système de liant sans eau, et l'angle de contact d'une goutte d'huile déposée sur la surface du produit de construction durci est ≥ 90 °, la détermination de l'angle de contact ayant lieu sous l'eau,
**caractérisée en ce que** la teneur en ciments Portland et/ou en ciments d'aluminates dans le système de liant est ≤ 20 % en poids, relativement au système de liant sans eau.

2. Utilisation selon la revendication 1, **caractérisée en ce que** la somme des oxydes calculée sous forme d'Al₂O₃ et de SiO₂ dans le système de liant est ≥ 50 % en poids, préférablement ≥ 60 % en poids, relativement au système de liant sans eau.

3. Utilisation selon la revendication 1 ou 2, **caractérisée en ce que** l'angle de contact est ≥ 100 °, préférablement ≥ 120 ° et en particulier ≥ 135 °.

4. Utilisation selon l'une quelconque des revendications 1 à 3, **caractérisée en ce que** la teneur en oxydes calculée sous forme de SiO₂ dans le système de liant est ≥ 15 % en poids, préférablement ≥ 25 % en poids et en particulier ≥ 35 % en poids, relativement au système de liant sans eau.

5. Utilisation selon l'une quelconque des revendications 1 à 4, **caractérisée en ce que** le système de liant comprend en outre des composés contenant de l'oxyde de titane et/ou de l'oxyde de zirconium et la somme des oxydes calculée sous forme d'Al₂O₃, SiO₂, TiO₂ et ZrO₂ dans le système de liant est ≥ 41 % en poids, préférablement ≥ 50 % en poids et en particulier ≥ 60 % en poids, relativement au système de liant sans eau.

6. Utilisation selon l'une quelconque des revendications 1 à 5, **caractérisée en ce que** la teneur en oxydes calculée sous forme de CaO dans le système de liant est ≤ 35 % en poids, préférablement ≤ 30 % en poids, préférablement en particulier de 8 % à 28 % en poids et en particulier de 12 % à 25 % en poids, relativement au système de liant sans eau.

7. Utilisation selon l'une quelconque des revendications 1 à 6, **caractérisée en ce que** la teneur en ciments Portland et/ou en ciments d'aluminates dans le système de liant est ≤ 10 % en poids, relativement au système de liant sans eau.

8. Utilisation selon l'une quelconque des revendications 1 à 6, **caractérisée en ce que** le liant hydraulique latent est sélectionné parmi des laitiers industriels et/ou synthétiques, en particulier le laitier de haut fourneau, le sable de laitier, le sable de laitier broyé, le laitier phosphoreux électrothermique, le laitier d'acier et des mélanges de ceux-ci.

9. Utilisation selon l'une quelconque des revendications 1 à 6, **caractérisée en ce que** le liant pouzzolanique est sélectionné parmi la silice amorphe, préférablement la silice précipitée, la silice pyrogénée et la microsilice, le verre broyé, la cendre volante, préférablement la cendre volante de charbon brun et la cendre volante de charbon minéral, le métakaolin, les pouzzolanes naturelles telles que le tuf, le trass et la cendre volcanique, les zéolites naturelles et synthétiques et des mélanges de ceux-ci.

10. Utilisation selon l'une quelconque des revendications 1 à 6, **caractérisée en ce que** le silicate de métal alcalin est sélectionné parmi des composés ayant la formule empirique m SiO₂ · n M₂O, où M est Li, Na et K et des mélanges de ceux-ci, préférablement Na et K.

11. Utilisation selon la revendication 10, **caractérisée en ce que** le rapport molaire m:n est de 0,5 à 4,0, préférablement de 0,7 à 3,8, préférablement en particulier de 0,9 à 3,7, et en particulier de 1,6 à 3,2.

12. Utilisation selon l'une quelconque des revendications 1 à 11, **caractérisée en ce que** de 15 % à 60 % en poids, préférablement de 25 % à 50 % en poids d'eau, sont nécessaires pour la prise.

13. Utilisation selon la revendication 12, **caractérisée en ce que** le liant hydraulique, hydraulique latent et/ou pouzzolanique et le silicate de métal alcalin sont présents ensemble sous la forme d'un seul constituant.

14. Utilisation selon la revendication 12, **caractérisée en ce que** le liant hydraulique, hydraulique latent et/ou pouzzolanique est présent sous la forme d'un premier constituant et le silicate de métal alcalin est présent conjointement avec au moins la quantité d'eau nécessaire pour la prise sous la forme d'un deuxième constituant.

15. Utilisation selon l'une quelconque des revendications 1 à 14, **caractérisée en ce que** des charges inertes et/ou des additifs supplémentaires sont présents en outre dans le système de liant.

16. Utilisation selon l'une quelconque des revendications 1 à 15, **caractérisée en ce que** le système de liant est utilisé comme, ou comme un constituant de formulations de matériaux de construction et/ou pour la production de produits de construction tels que le béton in situ, les éléments en béton fini, les articles en béton, les parpaings, et aussi le béton coulé sur place, le béton pulvérisé, le béton prêt à l'emploi, les adhésifs de construction et les adhésifs de systèmes composites d'isolation thermique, les systèmes de réparation du béton, les coulis de scellement à un constituant et à deux constituants, les mastics au couteau et les compositions autonivelantes, les adhésifs pour carreaux, les crépis, les adhésifs et matériaux d'étanchéification, les systèmes de revêtement et de peinture, en particulier pour les tunnels, les canalisations d'évacuation des eaux usées, les protections contre les éclaboussures et les tuyaux d'évacuation des produits de condensation, les mortiers secs, les produits d'étanchéité pour joints, les mortiers de drainage et/ou les mortiers de réparation.
